# EUROPEAN PATENT SPECIFICATION

(11) **EP 3 923 730 B1**
(45) Date of publication and mention of the grant of the patent: **17.09.2025**
(21) Application number: 20755958.4
(22) Date of filing: 14.02.2020
(51) Int. Cl.: A01N 43/36, A01N 25/30, A01N 37/44, A01N 59/00, A01P 7/04, A01N 43/90

(54) **PHOTOSENSITIZER AND CHELATING AGENT COMBINATIONS FOR USE AS INSECTICIDES**
PHOTOSENSIBILISATOR- UND CHELATBILDNER-KOMBINATIONEN ZUR VERWENDUNG ALS INSEKTIZIDE
COMBINAISONS DE PHOTOSENSIBILISATEUR ET D'AGENT CHÉLATANT DESTINÉES À ÊTRE UTILISÉES COMME INSECTICIDES

(30) Priority: 15.02.2019 US 201962806110 P
(43) Date of publication of application: 22.12.2021
(73) Proprietor: NUTRIEN AG SOLUTIONS (CANADA) INC., Calgary AB T2J 7E8 (CA)
(72) Inventor: FEFER, Michael, Mississauga, Ontario L5K 1A8 (CA); LIU, Jun, Mississauga, Ontario L5K 1A8 (CA); TESHLER, Inna, Mississauga, Ontario L5K 1A8 (CA); STEELE, Lisa, Mississauga, Ontario L5K 1A8 (CA)
(74) Representative: Peterreins Schley
(86) International application number: PCT/CA2020/050198
(87) International publication number: WO 2020/163965

(56) References cited:
- EP-A1- 1 402 776
- WO-A1-2013/192521
- WO-A1-2019/033216
- JP-A- 2014 193 849
- JP-B1- S4 819 929
- SZULBINSKI WITOLD ET AL: "Photoinduced Reduction of Water by Tin(IV) and Ruthenium(II) Porphyrins", INORGANICA CHIMICA ACTA, 1 January 1986 (1986-01-01), pages 91 - 97, XP055793440, Retrieved from the Internet <URL:http://nathan.instras.com/MyDocsDB/doc-608.pdf> [retrieved on 20210408]
- SZULBINSKI W ET AL: "Electrochemical and photocatalytic properties of water-soluble tin(iv) meso-tetraanilinporphyrin", JOURNAL OF ELECTROANALYTICAL CHEMISTRY AND INTERFACIAL ELECTROCHEMISTRY, ELSEVIER, AMSTERDAM, NL, vol. 226, no. 1-2, 10 July 1987 (1987-07-10), pages 157 - 170, XP026533394, ISSN: 0022-0728, [retrieved on 19870710], DOI: 10.1016/0022-0728(87)80041-4
- AMOR T B ET AL: "PORPHYRINS AND RELATED COMPOUNDS AS PHOTOACTIVATABLE INSECTICIDES I. PHOTOTOXIC ACTIVITY OF HEMATOPORPHYRIN TOWARD CERATITIS CAPITATA AND BACTROCERA OLEAE", PHOTOCHEMISTRY AND PHOTOBIOLOGY, WILEY-BLACKWELL PUBLISHING, INC, US, vol. 67, no. 2, 1 January 1998 (1998-01-01), pages 206 - 211, XP009013118, ISSN: 0031-8655, DOI: 10.1562/0031-8655(1998)067<0206:PARCAP>2.3.CO;2
- LUKSIENË ZIVILË ET AL: "Effects of visible-light-activated hematoporphyrin dimethyl ether on the survival of leafminer Liriomyza bryoniae", EKOLOGIJA, 1 January 2005 (2005-01-01), Lithuania, pages 17 - 21, XP055971297, Retrieved from the Internet <URL:http://elibrary.lt/resursai/LMA/Ekologija/0503_04_Eko_017_021.pdf> [retrieved on 20221014]

## Description

### FIELD

The technical field generally relates to insecticide compositions and methods of protecting plants from insect pests. More particularly, the technical field relates to the use of compositions including photosensitizer compounds and chelating agents for use as insecticides to protect plants, and methods of applying such compositions.

### BACKGROUND

Many types of insecticides are used to control insect pests. Nevertheless, common insecticides typically have several disadvantages, such as toxicity to humans, limited efficacy, possibility of developing insect resistance, high cost or potentially causing harm to the environment. For example, some of the known insecticides can have a high phytotoxicity when applied to plants to protect plants from destructive insect pests. There is therefore a need for new insecticides that can remedy at least some of these shortcomings. Amor T B et al "Porphyrins and related compounds as photoactivatable insecticides. I. Phototoxic activity of hematoporphyrin toward Ceratitis capitata and Bactrocera oleae", photochemistry and photobiology, Wiley-Blackwell publishing, Inc, US. Vol. 67, no. 2, 1 January 1998, pages 206-211, ISSN: 0031-8655, DOI:10.1562/0031-8655(1998)067 0206:PARCAP2.3.CO;2 relates to porphyrins as photosensitizers. In particular is relates to the phytodynamic sensitizer hematoporphyrin (HP) IX and its use on Ceratitis capitata.
Luksiene Zivile et al: "Effects of visible-light-activated hematoporphyrin dimethyl ether on the survival of leafminer Liriomyza bryoniae", EKOLOGIJA, 1 January 2005 (2005-01-01), pages 17-21, Lithuania relates to effects of visible-light-activated hematoporphyrin dimethyl ether on the survival of leafminer Liriomyza bryoniae.
EP 1 402 776 A1 relates to a pesticidal composition comprising a first component having chelating agent and/or metal complex of a chelating agent; and a carrier material edible to insect pests.

### SUMMARY

The invention is set out in the appended set of claims, which are directed to uses and methods in the field of insect pest control on a plant.

### DETAILED DESCRIPTION

Some nitrogen-bearing macrocyclic compounds, such as certain porphyrins, chlorins and their analogues, are known for having photosensitizing properties. At small doses, these compounds can be used to generate toxicity to insects, while having little or no phytotoxicity towards plants, and no toxicity to humans.

Application of a photodynamically active nitrogen-bearing macrocyclic compound to insects can therefore greatly lower the survival rate of most of the insect population. By applying the photosensitizer compound in combination with aminopolycarboxylic chelating agents (e.g., EDTA), the overall impact on the insect population can be increased compared to each used individually. This can allow lowering of the amount of photosensitizer required to control an insect population and can be quite useful to protect plants from insects while limiting the amount of insecticide to be applied.

In an implementation, the photosensitizer compound is a porphyrin or a reduced porphyrin compound, such as a chlorin compound, and is combined with a chelating agent. An exemplary porphyrin compound is protoporphyrin IX, an exemplary chlorin compound is chlorin e6, and the chelating agent is ethylenediaminetetraacetic acid (EDTA) or agriculturally acceptable salts thereof. More details regarding the photosensitizer compounds, chelating agents and other additives are provided in the present description.

### Definitions

Unless stated otherwise, the following terms and phrases as used herein are intended to have the following meanings.

When trade names are used herein, it is intended to independently include the tradename product and the active ingredient(s) of the tradename product.

The term "agriculturally acceptable salt", as used herein, refers to salts that exhibit pesticidal activity (i.e., that are active against one or more biotic stress, including stress caused by an insect pest). The term also refers to salts that are or can be converted in plants, water or soil to a compound or salt that exhibits pesticidal activity. The "agriculturally acceptable salt" can be an agriculturally acceptable cation or agriculturally acceptable anion. Non-limiting examples of agriculturally acceptable cations can include cations derived from alkali or alkaline earth metals and cations derived from ammonia and amines. For example, agriculturally acceptable cations can include sodium, potassium, magnesium, alkylammonium and ammonium cations. Non-limiting examples of agriculturally acceptable anions can include halide, phosphate, alkylsulfate and carboxylate anions. For example, agriculturally acceptable anions can include chloride, bromide, methylsulfate, ethylsulfate, acetate, lactate, dimethyl phosphate or polyalkoxylated phosphate anions.

The modifier "about" used in connection with a quantity is inclusive of the stated value and has the meaning dictated by the context. For example, the modifier "about" can include the degree of error associated with the measurement of the quantity.

The term "growing medium", as used herein, refers to any soil (of any composition) or soil-free (e.g., hydroponic) medium that is suitable for growing and cultivating a plant. The growing medium can further include any naturally occurring and/or synthetic substance(s) that are suitable for growing and cultivating the plant. The phrase "any surface of the growing medium" or "a surface of the growing medium", as used herein, refers to a surface that is directly exposed to natural and/or simulated light and/or weather.

The term "applying", as used herein, refers to contacting a surface of the growing medium with at least one compound of the present description (e.g., combinations, compositions, solutions, emulsions including at least one compound of the present description), by any means known in the art (e.g., pouring, root bathing, soil drenching, drip irrigation, etc.), or contacting an area that is beneath the surface of the growing medium with at least one compound of the present description (e.g., by soil injection), or any combination thereof, or directly contacting the plant with at least one compound of the present description (e.g., spraying).

The term "crop plant", as used herein, refers to a non-woody plant, which is grown, tended to, and harvested in a cycle of one year or less as source of foodstuffs and/or energy. Examples of crop plants include sugar cane, wheat, barley, rice, corn (maize), potatoes, sugar beets, barley, sweet potatoes, cassava, soybeans, tomatoes, and legumes (beans and peas). The crop plant can be a monocot or a dicot.

The term "woody plant", as used herein, refers to a woody perennial plant having a single stem or trunk, and bearing lateral branches at some distance from the ground (e.g., a tree). The woody plant can be a deciduous tree, an evergreen tree (e.g., a coniferous) or a shrub. Examples of woody plants include maple trees, citrus trees, apple trees, pear trees, oak trees, ash trees, pine trees, and spruce trees.

The term "turf grass", as used herein, refers to a cultivated grass that provides groundcover, for example a turf or lawn that is periodically cut or mowed to maintain a consistent height. Grasses belong to the Poaceae family, which is subdivided into six subfamilies, three of which include common turf grasses: the *Festucoideae* subfamily of cool-season turf grasses; and the *Panicoideae* and *Eragrostoideae* subfamiles of warm-season turf grasses. A limited number of species are in widespread use as turf grasses, generally meeting the criteria of forming uniform soil coverage and tolerating mowing and traffic. In general, turf grasses have a compressed crown that facilitates mowing without cutting off the growing point. In the present context, the term "turf grass" includes areas in which one or more grass species are cultivated to form relatively uniform soil coverage, including blends that are a combination of different cultivars of the same species, or mixtures that are a combination of different species and/or cultivars.

Examples of turf grasses include: bluegrasses (e.g., Kentucky bluegrass), bentgrasses (e.g., creeping bentgrass), Redtop, fescues (e.g., red fescue), ryegrasses (e.g., annual ryegrass), wheatgrasses (e.g., crested wheatgrass), beachgrass, Brome grasses (e.g., Arizona Brome), cattails (e.g., sand cattail), Alkaligrass (*Puccinellia distans*), crested dog's-tail (*Cynosurus cristatus*), bermudagrass (Cynodon spp. such as *Cynodon dactylon*), hybrid bermudagrass (e.g., tifdwarf bermudagrass), Zoysiagrasses (e.g., *Zoysia japonica*), St. Augustinegrass (e.g., Bitter Blue St. Augustinegrass), Centipedegrass (*Eremochloa ophiuroides*), Carpetgrass (*Axonopus fissifolius*), Bahiagrass (*Paspalum notatum*), Kikuyugrass (*Pennisetum clandestinum*), Buffalograss (*Buchloe dactyloids*), Seashore paspalum (*Paspalum vaginatum*), Blue Grama (*Bouteloua gracilis*), Black Grama (*Bouteloua eriopoda*), Sideoats Grama (*Bouteloua curtipendula*), Sporobolus spp. (e.g., *Alkali Sacaton*), Sand Dropseed (*Sporobolus cryptandrus*), Prairie Dropseed (*Sporobolus heterolepis*), Hordeum spp. (e.g., California Barley), Common Barley, Meadow Barley, Alopecurus spp. (e.g., Creeping Foxtail and Meadow Foxtail), Stipa spp. (e.g., Needle & Thread), Elymus spp. (e.g., Blue Wildrye), Buffelgrass (*Cenchrus ciliaris*), Big Quaking Grass (*Briza maxima*), Big Bluestem (*Andropogon gerardii*), Little Bluestem (*Schizachyruim scoparium*), Sand Bluestem (*Andropogon hallii*), Deergrass (*Muhlenbergia rigens*), Eastern Gamagrass (*Tripsacum dactyloides*), Galleta (Hilaria jamesii), Tufted Hairgrass (*Deschampsia caespitosa*), Indian Rice Grass (*Oryzopsis hymenoides*), Indian Grass (*Sorghastrum nutans*), Sand Lovegrass (*Eragrostis trichodes*); Weeping Lovegrass (*Eragrostis curvula*), California Melic (*Melica californica*)*,* Prairie Junegrass (Koeleria *pyramidata), Prairie Sandreed* (*Calamovilfa longifolia*), *Redtop (Agrostis alba), Reed Canarygrass* (*Phalaris arundinacea*), Sloughgrass (*Spartina pectinata*), Green Sprangletop (*Leptochloa dubia*), Bottlebush Squirreltail (*Sitanion hystrix*), Panicum Switchgrass (*virgatum*), and Purple Threeawn (*Aristida purpurea*).

### Photosensitizer compounds

As discussed above, photosensitizer compounds can be used to enable photodynamic suppression of insect pests (*i.e*., killing insect pests via photodynamic treatment) that can be present on plants. The photosensitizer compounds react to light by generating reactive oxygen species (ROS). The photosensitizer compounds can also be referred to as ROS generators. According to the invention, the photosensitizer used is a porphyrin, a reduced porphyrin, or a mixture thereof.

Depending on the type of ROS generated, photosensitizers can be classified into two classes, namely Type I photosensitizers and Type II photosensitizers. On the one hand, Type I photosensitizers form short-lived free radicals through electron abstraction or transfer from a substrate when excited at an appropriate wavelength in the presence of oxygen. On the other hand, Type II photosensitizers form a highly reactive oxygen state known as "singlet oxygen", also referred to herein as "reactive singlet oxygen species". Singlet oxygen species are generally relatively long lived and can have a large radius of action.

It should be understood that the photosensitizer compound can be metallated or non-metallated. When metallated, as can be the case for various nitrogen-bearing macrocyclic compounds that are complexed with a metal, the metal can be selected to generate either a Type I or a Type II photosensitizer in response to light exposure. For example, when chlorin photosensitizer compounds are metallated with copper, the ROS that are generated are generally Type I photosensitizers. When the same chlorin photosensitizer compounds are metallated with magnesium, the ROS that are generated are typically Type II photosensitizers. Both Type I and Type II photosensitizers can be used to enable photodynamic suppression of insect pests that can be present on plants. In some scenarios, the photosensitizer compound is a Type I photosensitizer. In other scenarios, the photosensitizer compound is a Type II photosensitizer.

It should be understood that the term "singlet oxygen photosensitizer", as used herein, refers to a compound that produces reactive singlet oxygen species when excited by light. In other words, the term "singlet oxygen photosensitizer" refers to a photosensitizer in which the Type II process defined above is dominant compared to the Type I process.

In some implementations, the photosensitizer compound is a photosensitive nitrogen-bearing macrocyclic compound that can include four nitrogen-bearing heterocyclic rings linked together. In some implementations, the nitrogen-bearing heterocyclic rings are selected from the group consisting of pyrroles and pyrrolines, and are linked together by methine groups (i.e., =CH- groups) to form tetrapyrroles. The nitrogen-bearing macrocyclic compound can for example include a porphyrin compound (four pyrrole groups linked together by methine groups), a chlorin compound (three pyrrole groups and one pyrroline group linked together by methine groups), a bacteriochlorin compound or an isobacteriochlorin compound (two pyrrole groups and two pyrroline groups linked together by methine groups), or porphyrinoids (such as texaphrins or subporphyrins), or a functional equivalent thereof having a heterocyclic aromatic ring core or a partially aromatic ring core (i.e., a ring core which is not aromatic through the entire circumference of the ring), or again multi-pyrrole compounds (such as boron-dipyrromethene). It should also be understood that the term "nitrogen-bearing macrocyclic compound" can be one of the compounds listed herein or can be a combination of the compounds listed herein. The nitrogen-bearing macrocyclic compound can therefore include a porphyrin, a reduced porphyin, or a mixture thereof. Such nitrogen-bearing macrocyclic compounds can also be referred to as "multi-pyrrole macrocyclic compounds" (e.g., tetra-pyrrole macrocyclic compounds).

It should be understood that the term "reduced porphyrin" as used herein, refers to the group consisting of chlorin, bacteriochlorin, isobacteriochlorin and other types of reduced porphyrins such as corrin and corphin.

It should be understood that the nitrogen-bearing macrocyclic compound can be a non-metal macrocycle (e.g., chlorin e6, Protoporphyrin IX or Tetra PhenylPorphyrin) or a metal macrocyclic complex (e.g., a Mg-porphyrin, Mg-chlorophyllin, Cu-chlorophyllin, Fe-Protoporphyrin IX etc.). The nitrogen-bearing macrocyclic compound can be an extracted naturally-occurring compound, or a synthetic compound.

In implementations where the porphyrin or the reduced porphyrin compound is metallated, the metal can be chosen such that the metallated nitrogen-bearing macrocyclic compound is a Type I photosensitizer or a Type II photosensitizer that generates reactive singlet oxygen species. For, example in the case of chlorins and porphyrins, non-limiting examples of metals that generally enable generation of reactive singlet oxygen species through the formation of a Type II photosensitizer are Mg, Zn, Pd, Sn, Al, Pt, Si, Ge, Ga and In. Similarly, non-limiting examples of metals that are known to form Type I photosensitizers when complexed with chlorins and/or porphyrins are Cu, Co, Fe, Ni and Mn.

It should be understood that when a metal species is mentioned without its degree of oxidation, all suitable oxidation states of the metal species are to be considered, as would be understood by a person skilled in the art. In other implementations, the metal species can be selected from the group consisting of Mg(II), Zn(II), Pd(II), Sn(IV), Al(III), Pt(II), Si(IV), Ge(IV), Ga(III) and In(III). In yet other implementations, the metal species can be selected from the group consisting of Cu(II), Co(II), Fe(II) and Mn(II). In yet other implementations, the metal species can be selected from the group consisting of Co(III), Fe(III), Fe(IV) and Mn(III).

It should also be understood that the specific metals that can lead to the formation of Type II photosensitizers versus metals that lead to the formation of Type I photosensitizers may vary depending on the type of nitrogen-bearing macrocyclic compound to which it is to be bound. It should also be understood that non-metallated nitrogen-bearing macrocyclic compounds can be Type I photosensitizers or Type II photosensitizers. For example, chlorin e6 and protoporphyrin IX are both Type II photosensitizers.

It should be understood that the nitrogen-bearing macrocyclic compound to be used in the methods and compositions of the present description can also be selected based on their toxicity to humans or based on their impact on the environment. For example, porphyrins and reduced porphyrins tend to have a lower toxicity to humans as well as enhanced environmental biodegradability properties when compared to other types of nitrogen-bearing macrocyclic compounds such as phthalocyanines.

The following formulae illustrate several examples of nitrogen-bearing macrocyclic compounds that can be used in the methods and compositions described herein:

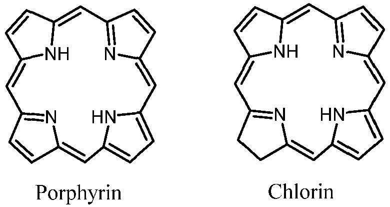

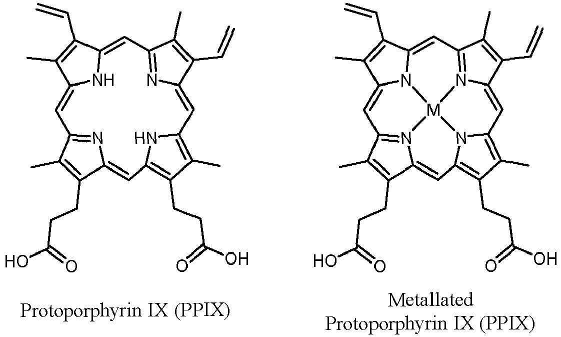

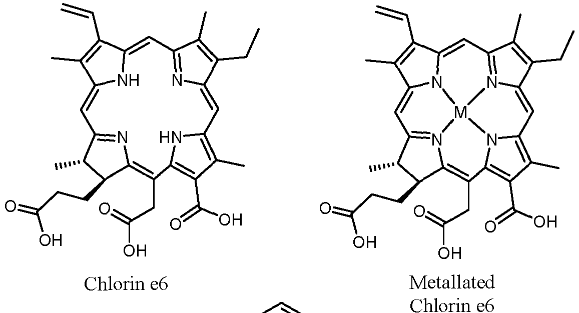

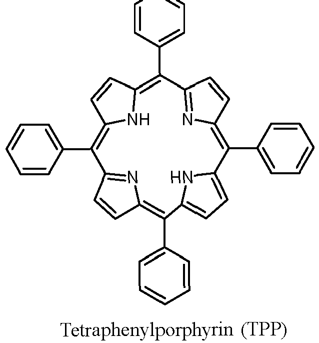

Various nitrogen-bearing macrocyclic compounds such as Zn-TPP and Mg-Chlorophyllin can be obtained from chemical suppliers such as Organic Herb Inc., Sigma Aldrich or Frontier Scientific. In some scenarios, the nitrogen-bearing macrocyclic compounds are not 100% pure and may include other components such as organic acids and carotenes. In other scenarios, the nitrogen-bearing macrocyclic compounds can have a high level of purity.

### Chelating agent

The photosensitizer compound can be applied to a plant and/or to insects in combination with a chelating agent (the chelating agent can also be referred to as a permeabilizing agent). It should be understood that the term "chelating agent", as used herein, refers generally to a compound that can form several chelating bonds to one or several metals or ions.

According to the claimed invention the chelating agent is ethylenediaminetetraacetic acid (EDTA). In some implementations not according to the claimed invention, the chelating agent can include one or more aminopolycarboxylic acid chelating agents, or agriculturally acceptable salts thereof. Examples of aminopolycarboxylic acid chelating agents include: diethylenetriaminepentaacetic acid (DTPA), hydroxyethylenediaminetriacetic acid (HEDTA), and ethylenediaminedisuccinate (EDDS), cyclohexanediaminetetraacetic acid (CDTA), N-(2- hydroxyethyl)ethylenediaminetriacetic acid (EDTA-OH) glycol ether diaminetetraacetic acid (GEDTA), alanine diacetic acid (ADA), alkanoyl ethylene diamine triacetic acids (e.g., lauroyl ethylene diamine triacetic acids (LED3A)), aspartic acid diacetic acid (ASDA), aspartic acid monoacetic acid, diamino cyclohexane tetraacetic acid (CDTA), 1,2- diaminopropanetetraacetic acid (DPTA-OH), 1,3-diamino-2-propanoltetraacetic acid (DTPA), diethylene triamine pentamethylene phosphonic acid (DTPMP), diglycolic acid, dipicolinic acid (DPA), ethanolamine diacetic acid, ethanol diglycine (EDG), ethylenediaminediglutaric acid (EDDG), ethylenediaminedi(hydroxyphenylacetic acid (EDDHA), ethylenediaminedipropionic acid (EDDP), ethylenediaminedisuccinate (EDDS), ethylenediaminemonosuccinic acid (EDMS), ethylenediaminetetrapropionic acid (EDTP), L-glutamic acid N,N-diacetic acid (GLDA), nitrilotriacetic acid (NTA), 3-hydroxy-2,2-iminodisuccinic acid (HIDS), methylglycine diacetic acid (MGDA), ethylenediamine-N,N'-dimalonic acid (EDDM), hydroxyethyliminodiacetic acid (HEIDA), iminodisuccinic acid (IDS), β-alanine diacetic acid (β-ADA), ethyleneglycolaminoethylestertetraacetic acid (EGTA), polyamino disuccinic acids, N-bis[2-(1,2-dicarboxyethoxyl)ethyl]glycine (BCA6), N-bis[2-(1,2-dicarboxyethoxyl)ethyl]aspartic acid (BCA5), N-bis[2-(1,2-dicarboxyethoxyl)ethyl]methylglycine (MCBA5), N-tris[(1,2-dicarboxyethoxy)ethyl]amine (TCA6), N-bis[2-(carboxymethoxy)ethyl]glycine (BCA3), N-bis[2-(methylcarboxymethoxy)ethyl]glycine (MCBA3), N-methyliminodiacetic acid (MIDA), iminodiacetic acid (IDA), N-(2-acetamido)iminodiacetic acid (ADA), hydroxymethyl-iminodiacetic acid, 2-(2-carboxyethylamino) succinic acid (CEAA), 2-(2-carboxymethylamino) succinic acid (CMAA), diethylenetriamine-N,N"-disuccinic acid, triethylenetetramine-N,N‴-disuccinic acid, 1,6-hexamethylenediamine-N,N'-disuccinic acid, tetraethylenepentamine-N,N""-disuccinic acid, 2-hydroxypropylene-1,3-diamine-N,N'-disuccinic acid, 1,2-propylenediamine-N,N'-disuccinic acid, 1,3-propylenediamine-N,N'-disuccinic acid, cis-cyclohexanediamine-N,N'-disuccinic acid, trans-cyclohexanediamine-N,N'-disuccinic acid, ethylenebis(oxyethylenenitrilo)-N,N'-disuccinic acid, glucoheptanoic acid, cysteic acid-N,N-diacetic acid, cysteic acid-N-monoacetic acid, alanine-N-monoacetic acid, N-(3-hydroxysuccinyl) aspartic acid, N-[2-(3-hydroxysuccinyl)]-L-serine, aspartic acid-N,N-diacetic acid, aspartic acid-N-monoacetic acid, and agriculturally acceptable salts (for example, the sodium salts, calcium salts and/or potassium salts) thereof.

In some implementations not according to the claimed invention, the aminopolycarboxylic acid chelating agents can be biodegradable. As used herein, the term "biodegradable" refers to a substance that can be broken down by exposure to environmental conditions including native or non-native microbes, sunlight, air or heat. It is understood that the use of the term "biodegradable" does not imply any particular degree of biodegradability, mechanism of biodegradability, or a specified biodegradation half-life.

Examples of biodegradable aminopolycarboxylic acid chelating agents can include: glutamic acid diacetic acid (GLDA), methylglycine diacetic acid (MGDA), β-alanine diacetic acid (β-ADA), ethylenediaminedisuccinic acid, S,S-ethylenediaminedisuccinic acid (EDDS), iminodisuccinic acid (IDS), hydroxyiminodisuccinic acid (HIDS), polyamino disuccinic acids, N-bis[2-(1,2-dicarboxyethoxyl)ethyl]glycine (BCA6), N-bis[2-(1,2-dicarboxyethoxyl)ethyl]aspartic acid (BCA5), N-bis[2-(1,2-dicarboxyethoxyl)ethyl]methylglycine (MCBA5), N-tris[(1,2-dicarboxyethoxy)ethyl]amine (TCA6), N-bis[2-(carboxymethoxy)ethyl]glycine (BCA3), N-bis[2-(methylcarboxymethoxy)ethyl]glycine (MCBA3), N-methyliminodiacetic acid (MIDA), iminodiacetic acid (IDA), N-(2-acetamido)iminodiacetic acid (ADA), hydroxymethyl-iminodiacetic acid, 2-(2-carboxyethylamino) succinic acid (CEAA), 2-(2-carboxymethylamino) succinic acid (CMAA), diethylenetriamine-N,N"-disuccinic acid, triethylenetetramine-N,N‴-disuccinic acid, 1,6-hexamethylenediamine-N,N'-disuccinic acid, tetraethylenepentamine-N,N""-disuccinic acid, 2-hydroxypropylene-1,3-diamine-N,N'-disuccinic acid, 1,2-propylenediamine-N,N'-disuccinic acid, 1,3-propylenediamine-N,N'-disuccinic acid, cis-cyclohexanediamine-N,N'-disuccinic acid, trans-cyclohexanediamine-N,N'-disuccinic acid, ethylenebis(oxyethylenenitrilo)-N,N'-disuccinic acid, glucoheptanoic acid, cysteic acid-N,N-diacetic acid, cysteic acid-N-monoacetic acid, alanine-N-monoacetic acid, N-(3-hydroxysuccinyl) aspartic acid, N-[2-(3-hydroxysuccinyl)]-L-serine, aspartic acid-N,N-diacetic acid, aspartic acid-N-monoacetic acid, any salt thereof, or any combination thereof.

In some implementations not according to the claimed invention, the aminopolycarboxylic acid chelating agent includes between 1 and 5 amino groups and between 2 and 8 carboxylic acid groups. In some implementations, the aminopolycarboxylic acid chelating agent includes between 1 and 5 amino groups, between 1 and 4 amino groups, between 1 and 3 amino groups, between 1 and 2 amino groups, 1 amino group or 2 amino groups. In some implementations, the aminopolycarboxylic acid chelating agent includes between 2 and 8 carboxylic acid groups, or between 2 and 7 carboxylic acid groups, or between 2 and 6 carboxylic acid groups, or between 2 and 5 carboxylic acid groups, or between 2 and 4 carboxylic acid groups, or between 2 and 3 carboxylic acid groups, or 2 carboxylic acid groups, or 3 carboxylic acid groups.

In some implementations not according to the claimed invention, the aminopolycarboxylic acid chelating agent is polymeric. In other implementations not according to the claimed invention, the aminopolycarbocylic acid chelating agent is non-polymeric.

Examples of non-polymeric aminopolycarboxylic acid chelating agents include the aminopolycarboxylic acid mentioned above. An example of a commercial non-polymeric aminopolycarboxylic acid chelating agent is Baypure^{®} CX100, which is a tetrasodium salt of IDS. An example of a commercial polymeric aminopolycarboxylic acid chelating agent is a polyaspartic acid salt such as Baypure^{®} DS, which is a polyaspartic acid sodium salt.

It will be understood that the one or more chelating agents can be provided as the free acid, as an agriculturally acceptable salt, or as combinations thereof. In some implementations, each of one or more the chelating agent(s) is applied as the free acid. In other implementations, the chelating agent(s) can be applied as a salt. Exemplary agriculturally acceptable salts include sodium salts, potassium salts, calcium salts, ammonium salts and combinations thereof. In still other implementations, when more than one chelating agent is present, at least one of the chelating agents can be applied as a free acid, and at least one of the chelating agents can be applied as a salt.

### Additives and adjuvants

In some implementations, the photosensitizer compound and the chelating agent can be applied to a plant and/or to insects in combination with one or more agriculturally suitable adjuvants. Each of the one or more agriculturally suitable adjuvants can be independently selected from the group consisting of one or more activator adjuvants (e.g., one or more surfactants; e.g., one or more oil adjuvants, e.g., one or more penetrants) and one or more utility adjuvants (e.g., one or more wetting or spreading agents; one or more humectants; one or more emulsifiers; one or more drift control agents; one or more thickening agents; one or more deposition agents; one or more water conditioners; one or more buffers; one or more anti-foaming agents; one or more UV blockers; one or more antioxidants; one or more fertilizers, nutrients, and/or micronutrients; and/or one or more herbicide safeners). Exemplary adjuvants are provided in Hazen, J.L. Weed Technology 14: 773-784 (2000).

In some implementations, the photosensitizer compound and the chelating agent can be applied to a plant and/or to insects in combination with oil. The oil can be selected from the group consisting of a mineral oil (e.g., paraffinic oil), a vegetable oil, an essential oil, and a mixture thereof. In some scenarios, combining the photosensitizer compound with an oil can improve solubility of the photosensitizer compound when in contact with the plant and/or the insects. The oil can be added with the photosensitizer compound, or separately, in the presence or absence of a carrier fluid such as water.

Examples of vegetable oils include oils that contain medium chain triglycerides (MCT), or oil extracted from nuts. Other examples of vegetable oils include coconut oil, canola oil, soybean oil, rapeseed oil, sunflower oil, safflower oil, peanut oil, cottonseed oil, palm oil, rice bran oil or mixtures thereof. Examples of mineral oils include paraffinic oils, branched paraffinic oils, naphthenic oils, aromatic oils or mixtures thereof.

Examples of paraffinic oils include various grades of poly-alpha-olefin (PAO). For example, the paraffinic oil can include HT60^{™}, HT100^{™}, High Flash Jet, LSRD^{™}, and N65DW^{™}. The paraffinic oil can include a paraffin having a number of carbon atoms ranging from about 12 to about 50, or from about 16 to 35. In some scenarios, the paraffin can have an average number of carbon atoms of 23. In some implementations, the oil can have a paraffin content of at least 80 wt%, or at least 90 wt%, or at least 99 wt%.

The photosensitizer compound and the oil can be added sequentially or simultaneously. When added simultaneously, the nitrogen-bearing macrocyclic compound and the oil can be added as part of the same composition or as part of two separate compositions. In some implementations, the nitrogen-bearing macrocyclic compound and the oil can be combined in an oil-in-water emulsion. That is, the combination can include the nitrogen-bearing macrocyclic compound combined with the oil and water so that the combination is formulated as an oil-in-water emulsion. The oil-in-water emulsion can also include other additives, such as a surfactant, one or more adjuvants or combinations thereof.

As used herein, the term "oil-in-water emulsion" refers to a mixture in which one of the oil (e.g., the paraffinic oil) and water is dispersed as droplets in the other (e.g., the water). In other words, the term "oil-in-water emulsion", as used herein, encompasses emulsions where droplets of oil are dispersed in a continuous water phase, and emulsions where droplets of water are dispersed in a continuous oil phase. In some implementations, an oil-in-water emulsion is prepared by a process that includes combining the paraffinic oil, water, and any other components and the paraffinic oil and applying shear until the emulsion is obtained. In other implementations, an oil-in-water emulsion is prepared by a process that includes combining the paraffinic oil, water, and any other components in the mixing tank and spraying through the nozzle of a spray gun.

In some implementations, the photosensitizer compound is part of a composition that includes a carrier fluid. A suitable carrier fluid can allow obtaining a stable solution, suspension and/or emulsion of the components of the composition in the carrier fluid. In some implementations, the carrier fluid is water. In other implementations, the carrier fluid is a mixture of water and other solvents or oils that are non-miscible or only partially soluble in water.

In some implementations, a combination of photosensitizer compound, chelating agent and oil can be used to increase mortality of insect pests. The combination can be an oil-in-water emulsion, where a surfactant is present and selected such that the photosensitizer compound is maintained in dispersion in the oil-in-water emulsion for delivery to the plant or to the insects.

The combination can include a surfactant (also referred to as an emulsifier). The surfactant can be selected from the group consisting of an ethoxylated alcohol, a polymeric surfactant, a fatty acid ester, a poly(ethylene glycol), an ethoxylated alkyl alcohol, a monoglyceride, an alkyl monoglyceride, an amphipathic glycoside, and a mixture thereof. For example, the fatty acid ester can be a sorbitan fatty acid ester. The surfactant can include a plant derived glycoside such as a saponin. The surfactant can be present as an adjuvant to aid coverage of plant foliage or applied to the insects. The surfactant can be an acceptable polysorbate type surfactant (e.g., Tween 80), a nonionic surfactant blend (e.g., Altox^{™} 3273), or another suitable surfactant.

In some implementations, the poly(ethylene glycol) can include a poly(ethylene glycol) of Formula R¹-O-(CH₂CH₂O)_{f}-R², wherein: each R¹ and R² is each, independently, H, alkyl, substituted alkyl, aryl, substituted aryl, CO(alkyl) or CO(substituted alkyl); and f is an integer selected from 1 to 100; wherein the substituted alkyl groups are, independently, substituted with one or more F, CI, Br, I, hydroxyl, alkenyl, CN and N₃.

### Compositions including a photosensitizer compound

It should also be understood that the photosensitizer compounds and the other agents (e.g., chelating agent, oil, surfactant, etc.) can be provided to a plant and/or to insects separately or together as part of the same composition. In some implementations, the components of the compositions can be packaged in a concentrated form, without carrier fluid, and the carrier fluid (e.g., water) can be added to form the composition directly by the operator that can then apply the composition to plants and/or insects.

When the components are provided as part of a single composition, the composition can be provided to have certain concentrations and relative proportions of components. For example, the composition can have between about 100 nanomolar and about 50 millimolar, between about 5 micromolar and about 10 millimolar, between about 1 micromolar and about 1000 micromolar, or between about 5 micromolar and about 200 micromolar of the photosensitizer compound; between about 10 micromolar and about 150 micromolar of the nitrogen-bearing macrocyclic compound; between about 25 micromolar and about 100 micromolar of the photosensitizer compound, or between about 50 micromolar and about 75 micromolar of the photosensitizer compound.

For example, the composition can also include between about 2 micromolar and about 10,000 micromolar of the chelating agent, between about 5 micromolar and about 5,000 micromolar of the chelating agent, between about 10 micromolar and about 1,000 micromolar of the chelating agent, between about 25 micromolar and about 500 micromolar of the chelating agent, or between about 50 micromolar and about 100 micromolar of the chelating agent.

For example, the relative proportion, by weight, of the nitrogen-bearing macrocyclic compound and the chelating agent in the composition can be between about 50:1 and about 1:1000, between about 20:1 and about 1:500, between about 10:1 and about 1:100, or between about 1:1 and about 1:10.

For example, the photosensitizer compound and the oil can be applied in a relative proportion, by weight, between about 50:1 and about 1:1000, between about 20:1 and about 1:500, between about 10:1 and about 1:100, or between about 1:1 and about 1:10.

The composition including the photosensitizer compound can be applied to plants and/or insects in various ways. For example, the composition can be prepared to include the photosensitizer compound, a chelating agent as well as a delivery fluid, such as water or a water-oil emulsion. The composition can be applied to the plant and/or insect by spraying, misting, sprinkling, pouring, dipping or any other suitable method. The pesticide composition can be applied to the foliage, roots and/or stem of the plant. Other additives can also be included in the pesticide composition, and other application methods can also be performed.

The plants on which the composition is applied can be outdoors or indoors (e.g., greenhouse) where they are exposed to natural sunlight, or in an indoor location where they are exposed to artificial light. The exposure to the incident light is provided such that the photosensitizer compound can generate ROS that, in turn, increases mortality of insect pests.

In some scenarios, the combination of photosensitizer compound and chelating agent (e.g., a composition comprising the photosensitizer compound and the chelating agent) can be applied directly to the plant, before infestation by insect pests as a preventative measure. In such case, the insect pests can contact the combination soon after infesting the plant, for example by direct contact with the combination located on the plant, or by ingesting parts of the plant, thereby ingesting the combination. In other scenarios, the combination can be applied at or after infestation of a plant by insect pests. In such case, the combination is applied to both the insect pests and the plant.

In yet other scenarios, the combination can be applied to the insect pests prior to the insect pests infesting a plant (i.e., while the insect pests are located at a different location). In such a scenario, the insect pests can come in contact with the plant after coming in contact with the combination.

It is understood that by using the expression "applying to the plant and/or to the insect pests a combination" of the photosensitizer compound and the chelating agent, it is meant that the combination can be applied to the plant alone prior to infestation of the plant by the insect pests, to the plant and to the insect pests at or after infestation of the plant by the insect pests, to the insect alone prior to infestation of the plant by the insect pests (e.g., while the insect pests are not yet located on the plant), or to both the insect alone and to the plant alone prior to infestation of the plant by the insect pests.

In some implementations, the combination can be used to treat seeds or seedlings. In some scenarios, the treatment of seeds or seedlings can stimulate germination and growth, and/or can increase resistance of the plant to abiotic stresses. In some implementations, the seeds or seedlings can be treated with the photosensitizer compound prior to being planted into a growing medium. In some implementations, the seeds or seedlings can be treated with the photosensitizer compound after being planted into a growing medium.

The combination can be directly surface-coated onto the seeds, applied to the seedling roots or seedlings leafs (foliar application on seedlings). In some implementations, a solution or emulsion containing the photosensitizer compound can be directly sprayed onto the seeds or seedlings. In some implementations, the seeds or seedlings can be dipped into a solution or emulsion containing the photosensitizer compound. In some implementations, the root of the seedling can be dipped into a solution or emulsion containing the photosensitizer compound. In some implementations, the seeds can be placed into a container, and a solution containing the photosensitizer compound can be introduced into the container. The container can then be shaken for an appropriate period (e.g., between about 1 minute to several minutes) such that the solution contacts the seeds. The shaken seeds can then be dried (e.g., air dried) prior to being planted.

The combination can be applied once, twice, or more than twice to seeds or seedlings, using various modes of application. For example, the seeds can be treated after having been planted into a growing medium. In another example, the seeds and/or seedlings can be treated prior to having been planted and after having been planted (e.g., in furrow treatment and/or foliar application). In yet another example, the seed can be treated prior to having been planted and/or after having been planted, and the ensuing seedling can be further treated (e.g., root treatment and/or foliar treatment).

### Insecticide activity

In some implementations, the compounds and combinations of the present description can be used to protect the plant from an insect pest. In should be understood that the terms "insect pest" or "pest", as used herein, refers to adult insects and/or their larvae or nymphs, which are known to or have the potential to cause damage to the plant. In some implementations, the compounds and combinations of the present description can induce photoinduced mortality in insect pests.

In some implementations, the insect pests are selected from the order of Hemiptera (groups of aphids, whiteflies, scales, mealybugs, stink bugs), Coleoptera (groups of beetles), Lepidoptera (groups of butterflies, moths), Diptera (groups of flies), Thysanoptera (group of thrips), Orthoptera (group of grasshoppers, locusts), Hymenoptera (groups of wasps, ants), Blattodea (groups of coackroaches and termites) and mite pests (spider mites).

Examples of insect pests include: larvae of the order Lepidoptera, such as armyworms, (e.g., beet armyworm (*Spodoptera exigua*)), cutworms, loopers, (e.g., cabbage looper (*Trichoplusia ni*)) and heliothines, in the family Noctuidae (e.g., fall armyworm (*Spodoptera fugiperda* J. E. Smith)), beet armyworm (*Spodoptera exigua* Hubner), black cutworm (*Agrotis ipsilon* Hufnagel), and tobacco budworm (*Heliothis virescens* Fabricius); borers, casebearers, webworms, coneworms, cabbageworms and skeletonizers from the family Pyralidae (e.g., European corn borer (*Ostrinia nubilalis* Hubner)), navel orangeworm (*Amyelois transitella* Walker), corn root webworm (*Crambus caliginosellus* Clemens), and sod webworms (Pyralidae: Crambinae) such as sod webworm (*Herpetogramma licarsisalis* Walker), leafrollers, budworms, seed worms, and fruit worms in the family Tortricidae (e.g., codling moth (*Cydia pomonella* Linnaeus)), grape berry moth (*Endopiza viteana* Clemens), oriental fruit moth (*Grapholita molesta* Busck) and many other economically important *Lepidoptera* (e.g., diamondback moth (*Plutella xylostella* Linnaeus)), pink bollworm (*Pectinophora gossypiella* Saunders), and gypsy moth (*Lymantria dispar* Linnaeus); foliar feeding larvae and adults of the order Coleoptera including weevils from the families Anthribidae, Bruchidae, and Curculionidae (e.g., boll weevil (*Anthonomus grandis* Boheman)), rice water weevil (*Lissorhoptrus oryzophilus* Kuschel), granary weevil (*Sitophilus granarius* Linnaeus), rice weevil (*Sitophilus oryzae* Linnaeus), annual bluegrass weevil (*Listronotus maculicollis* Dietz), bluegrass billbug (*Sphenophorus parvulus* Gyllenhal), hunting billbug (*Sphenophorus venatus* vestitus), Denver billbug (*Sphenophorus cicatristriatus* Fahraeus), flea beetles, cucumber beetles, rootworms, leaf beetles, Colorado potato beetles (*Leptinotarsa decemlineata*), and leafminers in the family Chrysomelidae, western corn rootworm (*Diabrotica virgifera virgifera* LeConte); chafers and other beetles from the family Scaribaeidae (e.g., Japanese beetle (*Popillia japonica* Newman)), oriental beetle (*Anomala orientalis* Waterhouse), northern masked chafer (*Cyclocephala borealis* Arrow), southern masked chafer (*Cyclocephala immaculate* Olivier), black turfgrass *ataenius* (*Ataenius spretulus* Haldeman), green June beetle (*Cotinis nitida* Linnaeus), Asiatic garden beetle (*Maladera castanea* Arrow), May/June beetles (*Phyllophaga* spp.) and European chafer (*Rhizotrogus majalis* Razoumowsky)); carpet beetles from the family Dermestidae; wireworms from the family Elateridae; bark beetles from the family Scolytidae; flour beetles from the family Tenebrionidae; adults and nymphs of the order Orthoptera including grasshoppers, locusts, and crickets (e.g., migratory grasshoppers (e.g., *Melanoplus sanguinipes* Fabricius, *M*. *differentialis* Thomas)), American grasshoppers (e.g., *Schistocerca americana* Drury), desert locust (*Schistocerca gregaria* Forskal), migratory locust (*Locusta migratoria* Linnaeus), bush locust (*Zonocerus* spp.); adults and larvae of the order Diptera including leafminers, midges, fruit flies (Tephritidae), fruit flies (e.g., *Oscinella frit* Linnaeus), soil maggots; adults and nymphs of the orders Hemiptera and Homoptera such as plant bugs from the family Miridae, leafhoppers (e.g., *Empoasca* spp.) from the family Cicadellidae; planthoppers from the families Fulgoroidae and Delphacidae (e.g., corn plant hopper (Peregrinus maidis)); treehoppers from the family Membracidae; chinch bugs (e.g., hairy chinch bug (*Blissus leucopterus* hirtus Montandon) and southern chinch bug (*Blissus insularis* Barber) and other seed bugs from the family Lygaeidae; spittlebugs from the family Cercopidae; squash bugs from the family Coreidae; red bugs and cotton stainers from the family Pyrrhocoridae; mealybugs from the family Pseudococcidae (e.g. *Planicoccus citri* Risso), cicadas from the family Cicadidae; psyllids from the family Psyllidae( e.g. Citrus psyllid *Diaphorina citri*)), whiteflies from the family Aleyrodidae (silverleaf whitefly (*Bemisia argentifolii*)); aphids from the family Aphididae, such as cotton melon aphid (*Aphis gossypii*), pea aphid (*Acyrthisiphon pisum* Harris), cowpea aphid (*Aphis craccivora* Koch), black bean aphid (*Aphis fabae* Scopoli), melon or cotton aphid (*Aphis gossypii* Glover), apple aphid (*Aphis pomi* De Geer), spirea aphid (*Aphis spiraecola* Patch), foxglove aphid (*Aulacorthum solani* Kaltenbach), strawberry aphid *Chaetosiphon fragaefolii* Cockerell), Russian wheat aphid (*Oiuraphis noxia* Kurdjumov/Mordvilko), rosy apple aphid (*Dysaphis plantaginea* Paaserini), woolly apple aphid (*Eriosoma lanigerum* Hausmann), mealy plum aphid (*Hyalopterus pruni* Geoffroy), turnip aphid (*Lipaphis erysimi* Kaltenbach), cereal aphid (*Metopolophium dirrhodum* Walker), potato aphid (*Macrosipum euphorbiae* Thomas), peach-potato and green peach aphid (*Myzus persicae* Sulzer), lettuce aphid (*Nasonovia ribisnigri* Mosley), root aphids and gall aphids, corn leaf aphid (*Rhopalosiphum maidis* Fitch), bird cherry-oat aphid (*Rhopalosiphum padi* Linnaeus), greenbug (*Schizaphis graminum* Rondani), English grain aphid (*Sitobion avenae* Fabricius), spotted alfalfa aphid (*Therioaphis maculata* Buckton), black citrus aphid (*Toxoptera aurantii* Boyer de Fonscolombe), brown citrus aphid (*Toxoptera citricida* Kirkaldy) and green peach aphid (*Myzus persicae*); phylloxera from the family Phylloxeridae; mealybugs from the family Pseudococcidae; scales from the families Coccidae, Diaspididae, and Margarodidae; lace bugs from the family Tingidae; stink bugs from the family Pentatomidae; adults and immatures of the order Thysanoptera including onion thrips (*Thrips tabaci* Lindeman), flower thrips (*Frankliniella* spp.), and other foliar feeding thrips.. Agronomic pests also include invertebrate arthropods such as mites from the family Tetranychidae: twospotted spider mite (e.g. *Tetranychus urticae Koch*), flat mite from family Rutacea (e.g., citrus flat mite (*Brevipalpus lewisi* McGregor); rust and bud mites from the family Eriophyidae and other foliar feeding mites. Economically important agricultural pests nematodes (e.g., root knot nematodes in the genus *Meloidogyne,* lesion nematodes in the genus *Pratylenchus,* and stubby root nematodes in the genus *Trichodorus*) and members of the classes Nematoda, Cestoda, Trematoda, and Acanthocephala from orders of Strongylida, Ascaridida, Oxyurida, Rhabditida, Spirurida, and Enoplida.

The combination of photosensitizer and chelating agent can be applied to the plant before, at or after infestation of the plant by the insect pests.

In some implementations, the combinations of the present description can be used as insecticides by applying the combinations to insects (i.e., without applying the combinations to a plant). The present description therefore also provides a method for controlling insect population. The method includes applying to the insects a combination including a nitrogen-bearing macrocyclic compound which is a photosensitizer that generates reactive oxygen species in the presence of light, the photosensitizer being selected from the group consisting of a porphyrin, a reduced porphyrin and a mixture thereof; and a chelating agent which is an aminopolycarboxylic acid compound or a salt thereof; and exposing the insects to light to activate the nitrogen-bearing macrocyclic compound and generate reactive oxygen species.

It should be understood that applying the combination to the insects can include indirectly applying the combination to the insect pests (e.g., by applying the combination to a food source that is then fed to the insects) and/or directly applying the combination to the insect pests (e.g., by directly contacting the insects with the combination, such as by spraying the combination onto the insects).

### Types of plants

The photosensitizer compounds and compositions of the present description can be used for various types of plants. The plant can be a non-woody crop plant, a woody plant, an ornamental plant or a turfgrass. The plant can be selected from the group consisting of a crop plant, a fruit plant, a vegetable plant, a legume plant, a cereal plant, a fodder plant, an oil seed plant, a field plant, a garden plant, a green-house plant, a house plant, a flower plant, a lawn plant, a turfgrass, a tree such as a fruit-bearing tree, a grapevine and other plants that may be affected by plant pest infestation. Some of the compounds of the present description can display a certain degree of toxicity against a variety of noxious plant pests, in the absence or presence of light.

In some implementations, the plant is a crop plant selected from the group consisting of sugar cane, wheat, barley, rice, corn (maize), potatoes, sugar beets, sweet potatoes, cassava, soybeans, tomatoes, and legumes (beans and peas).

In other implementations, the plant is a tree selected from the group consisting of deciduous trees and evergreen trees. Examples of trees include, maple trees, fruit trees such as citrus trees, apple trees, and pear trees, an oak tree, an ash tree, a pine tree, and a spruce tree.

In yet other implementations, the plant is a shrub.

In yet other implementations, the plant is a fruit or nut plant. Examples of such plants include: acerola (barbados cherry), atemoya, carambola (star fruit), rambutan, almonds, apricots, cherries, nectarines, peaches, pistachio, apples, avocados, bananas, platains, figs, grapes, mango, olives, papaya, pears, pineapple, plums, strawberries, grapefruit, lemons, limes, oranges (e.g., navel and Valencia), tangelos, tangerines, mandarins and plants from the berry and small fruits plant group.

In other implementations, the plant is a vegetable plant. Examples of such plants include: asparagus, bean, beets, broccoli, Chinese broccoli, broccoli raab, brussels sprouts, cabbage, cauliflower, Chinese cabbage (e.g., bok choy and mapa), Chinese mustard cabbage (gai choy), cavalo broccoli, collards, kale, kohlrabi, mizuna, mustard greens, mustard spinach, rape greens, celery, chayote, Chinese waxgourd, citron melon, cucumber, gherkin, hyotan, cucuzza, hechima, Chinese okra, balsam apple, balsam pear, bitter melon, Chinese cucumber, true cantaloupe, cantaloupe, casaba, crenshaw melon, golden pershaw melon, honeydew melon, honey galls, mango melon, Persian melon, pumpkin, summer squash, winter squash, watermelon, dasheen (taro), eggplant, ginger, ginseng, herbs and spices (e.g., curly leaf basil, lemon balm, cilantro, Mexican oregano, mint), Japanese radish (daikon), lettuce, okra, peppers, potatoes, radishes, sweet potatoes, Chinese artichoke (Japanese artichoke), corn and tomatoes.

In other implementations, the plant is a flowering plant, such as roses, flowering shrubs or ornamentals. Examples of such plants include flowering and foliage plants including roses and other flowering shrubs, foliage ornamentals & bedding plants; fruit-bearing trees such as apple, cherry, peach, and pear trees, non-fruit-bearing trees, shade trees, ornamental trees, and shrubs (e.g., conifers, deciduous and broadleaf evergreens & woody ornamentals).

In some implementations, the plant is a houseplant. Examples of such plants include chrysanthemum, dieffenbachia, dracaena, ferns, gardenias, geranium, jade plant, palms, philodendron, and schefflera.

In some implementations, the plant is a plant grown in a greenhouse. Examples of such plants include: ageratum, crown of thorns, dieffenbachia, dogwood, dracaena, ferns, ficus, holly, lisianthus, magnolia, orchid, palms, petunia, poinsettia, schefflera, sunflower, aglaonema, aster, azaleas, begonias, browallia, camellias, carnation, celosia, chrysanthemum, coleus, cosmos, crepe myrtle, dusty miller, easter lilies, fuchsia, gardenias, gerbera, hellichrysum, hibiscus foliage, hydrangea, impatiens, jade plant, marigold, new guinea, impatiens, nicotonia, philodendron, portulaca, reiger begonias, snapdragon, and zinnias.

### Synergistic effect of the combinations

In some scenarios, the combinations can exhibit a synergistic response for killing insect pests. It should be understood that the terms "synergy" or "synergistic", as used herein, refer to the interaction of two or more components of a combination (or composition) so that their combined effect is greater than the sum of their individual effects. This may include, in the context of the present description, the action of two or more of the nitrogen-bearing macrocyclic compounds, the oil, and the chelating agent. In some scenarios, the nitrogen-bearing macrocyclic compound and the oil can be present in synergistically effective amounts. In some scenarios, the nitrogen-bearing macrocyclic compound and the chelating agent can be present in synergistically effective amounts. In some scenarios, the oil and the chelating agent can be present in synergistically effective amounts. In some scenarios, the nitrogen-bearing macrocyclic compound, the oil and the chelating agent can be present in synergistically effective amounts.

In some scenarios, the approach as set out in S. R. Colby, "Calculating synergistic and antagonistic responses of herbicide combinations", Weeds 15, 20-22 (1967), can be used to evaluate synergy. Expected efficacy, E, may be expressed as: E=X+Y(100-X)/100, where X is the efficacy, expressed in % of the untreated control, of a first component of a combination, and Y is the efficacy, expressed in % of the untreated control, of a second component of the combination. The two components are said to be present in synergistically effective amounts when the observed efficacy is higher than the expected efficacy.

### EXAMPLES

### Example 1

Experiments were conducted to evaluate the efficacy of formulations including a photosensitizer compound and a chelating agent to protect a plant (Coleus plant) against insects (Citrus Mealybug).

Colonies of Citrus Mealybug (*Planococcus citri Risso*) were maintained on Coleus plants (*Solenostemon Scutellarioides* L. Codd) grown in a Greenhouse under 24±4°C and 16 h light/8 h dark photoperiod. The Coleus plants were grown in 5-gal plastic pots containing soil mix for greenhouse use (Sunshine LC1, Sun Gro Horticulture Canada Ltd.). Plants were watered as needed and fertilized twice a week with 20-20-20 water soluble fertilizers. Host plants were not initially exposed to pesticide treatments.

Small crowns of coleus shoots (4-6 cm in height, 6-7 leaves) were excised from the mature healthy plant and inserted into water-filled 50 ml plastic vials. The vials were covered with the lead with a small opening to prevent insects from drowning. Vials with host plant cuttings and insects were placed into 500 ml transparent plastic containers and covered with transparent leads.

Homogenous mealybug instars-crawlers were carefully collected from the infested coleus plants using tip-moist soft fine paintbrush into a petri dish lined with filter paper. A total of 20 mealybug instars were released on upper leaves of each coleus shoot. Containers with introduced insects were placed on a metal rack equipped with LED light 250 µmol m⁻² s⁻¹ (PAR - Photosynthetically Active Radiation), irradiated for 14 h and randomly arranged. Rack was located in the Plant Growth Room at 24-25°C.

Three bioassays were performed using different application methodologies: 1) Insect exposure to direct spray application in petri dishes; and 2) Insect exposure to direct spray on plants.

All treatments were applied as a fine spray using a 100ml hand-held plastic spray bottle and delivering thorough coverage of the coleus shoots. Each treatment was replicated 4 times. Water treatment was used as a Control.

Insects were examined using 10X magnifying glass. Mealybugs were considered dead if no movement was detected after mechanical stimulation with a paintbrush. The number of live and dead insects were recorded. Insect mortality was assessed for up to 96 hours after treatment (HAT-hours after treatment).

Percentage of citrus mealybug mortality for each treatment was calculated and data was subjected to One-way ANOVA combine with All Pairwise Multiple Comparison Procedures using the Fisher protected LSD mean separation test, P≤ 0.05.

The treated coleus shoots were also examined for phytotoxicity symptoms. Phytotoxicity evaluation was based on a 0 to 5 Rating scale, where 0 = no symptoms of phytotoxicity and 5 = severe damage causing leaf drop.

### Mealybug exposure to direct spray in petri dishes

Mealybug instars were transferred into plastic containers lined with filter paper, sprayed and immediately exposed to light for 1h. At that point insects were carefully transferred on clean coleus shoots for feeding and exposed to light for additional 13 h. Insects in treatment 4 were exposed to sunlight for 4 h (sunny day, air temperature 26°C). The results are summarized in Table 1A below.

**Table 1A. Effect of photosensitizer and chelator on Mealybug Instars Mortality.**

| | Treatment | Light exposure, hours | Insect Mortality, % | |
|---|---|---|---|---|
| # | | | 24 HAT | 96 HAT |
| 1 | Control (water) | Simulated daylight (LED) -14 h | 8.8 | 20 |
| 2 | 0.2 wt% MgChln | Simulated daylight (LED) -14 h | 32.8 | 46.3 |
| 3 | 0.2 wt% MgChIn + 0.1 wt%Na₂EDTA + 0.05 wt% surfactant | Simulated daylight (LED) -14 h | 60 | 78.8 |
| 4 | 0.2 wt% MgChIn + 0.1 wt% Na₂EDTA + 0.05 wt% surfactant | Sunlight - 4 h | 68.7 | 75 |

Insect mortality reached 60% at 24 HAT and 78.8 % at 96 HAT under artificial light exposure in treatment 3 and 68.7% and 75 % respectively under sun exposure for 4 hours in treatments 4 compare to 8.8% and 20 % insect Mortality in control.

### Mealybug exposure to direct spray on plants

Mealybug were introduced to coleus shoots. Two hours later, the shoots were sprayed with photosensitizer and placed under the light for 14 hours. The results are summarized in Table 1B below.

**Table 1B. Effect of PS formulations on Mealybug Instars Mortality.**

| | Treatment | Insect Mortality, % | |
|---|---|---|---|
| # | | 24 HAT | 96 HAT |
| 1 | Control (water) | 8.8 | 20 |
| 2 | 0.2 wt% MgChln | 50 | 68.8 |
| 3 | 0.2 wt%MgChln + 0.1 wt% Na₂EDTA + 0.05 wt% surfactant | 87.5 | 93.8 |

When plants infested with mealybugs were sprayed with 0.2% MgChIn in water and MgChIn formulation containing 0.1% Na₂EDTA + 0.05% surfactant a significant insect mortality was recorded at 24 and 96 HAT.

Phytotoxicity evaluation: treated coleus shoots did not display any visible symptoms of phytotoxicity. None of the tested formulations caused phytotoxicity on plant leaves.

### Example 2

Experiments were conducted to evaluate the efficacy of photosensitizes and chelators for control of insect pest potato aphids (*Macrosiphum euphorbiae*).

Potato aphids (*Macrosiphum euphorbiae*) were obtained from a colony maintained on Bell pepper (Capsicum *annuum L.*) plants grown in 1-gal plastic pots containing soil mix for greenhouse use (Sunshine LC1, Sun Gro Horticulture Canada Ltd.). Plants were watered as needed and fertilized twice a week with 20-20-20 water soluble fertilizers. Host plants were not exposed to pesticide treatments.

Pepper leaves infested with aphid nymphs were collected and each leaf was placed in 50 ml vials filled with water. Vials were covered with the lead with a small opening to prevent insects from drowning. Vials with host plant leaf infested with insects were placed in 500 ml transparent plastic containers and covered with transparent leads.

Infected leaves were carefully sprayed with treatment solutions on upper and lower leaf surfaces to ensure the contact of aphids and treatment solution. All treatments were applied as a fine spray using a hand-held plastic spray bottle. Each treatment was replicated 4 times. Water treatment was used as a Control.

One part of the containers with treated insects was placed on metal rack equipped with LED light 250 µmol m⁻² s⁻¹ (PAR -Photosynthetically Active Radiation) for irradiation during 14 h and another part was kept in the dark conditions. After 14 h of exposure to LED light or dark insects were kept at a regular 14 h/10 h (light/night) photoperiod. Containers with insects were arranged in a randomized fashion. The experimental rack was placed in the Plant Growth Room at 24-25°C.

The number of live aphids on each leaf (replicate/container) was counted before application of the treatments, as well as 24 h and 48 h after the treatments. The insects were examined using 10 X magnifying glass. Aphids were considered dead if no movement was detected after mechanical stimulation with the paintbrush. The results are summarized in Tables 2A (light exposure) and 2B (no light exposure) below.

Percentage of mortality was calculated by using the numbers of live and dead aphids. Percentage of mortality was rated as zero, when number of insects in the sample increased during the experiment (aphids females gave birth to nymphs).

**Table 2A. Effect of photosensitizer and chelator on Potato aphid Mortality. Exposure to LED light after the treatment.**

| | Treatment | LED Light exposure | Mean Insects Mortality, % | |
|---|---|---|---|---|
| # | | hours | 24 HAT | 48HAT |
| 1 | Control (water) | 14 | 12 | 12 |
| 2 | 0.2 wt% MgChln | 14 | 24 | 24 |
| 3 | 0.2 wt% MgChIn + 0.05 wt% surfactant | 14 | 19 | 21 |
| 4 | 0.2 wt% MgChIn + 0.1 wt% Na₂EDTA + 0.05 wt% surfactant | 14 | 50 | 61 |
| 5 | 0.1% Na₂EDTA | 14 | 6 | 20 |

**Table 2B. Effect of photosensitizer and chelator on potato aphid mortality. No light exposure after the treatment (dark).**

| | Treatment | Dark exposure | Mean Insect Mortality, % | |
|---|---|---|---|---|
| # | | hours | 24 HAT | 48 HAT |
| 1 | Control (water) | 24 | 7 | 27 |
| 2 | 0.2 wt% MgChln | 24 | 5 | 17 |
| 3 | 0.2 wt% MgChIn + 0.05 wt% surfactant | 24 | 10 | 21 |
| 4 | 0.2 wt% MgChIn + 0.1 wt% Na₂EDTA+0.05% surfactant | 24 | 18 | 44 |

Table 2A shows that when MgChIn is combined with Na₂EDTA, there is a synergistic effect compared to MgChIn and Na₂EDTA used alone. Data in Tables 2A and 2B demonstrates that photosensitizer activity was affected by exposure to LED light and that the efficacy against aphids improved under the light exposure conditions, especially when the photosensitizer was combined with Na₂EDTA.

### Example 3

Experiments were conducted to evaluate the efficacy of photosensitizes and chelators for control of insect pest Silverleaf whitefly (*Bemesia argentifolii*).

The experiments were conducted in a greenhouse. Whiteflies were maintained on Common Poinsettia plants (*Euphorbia pulcherrima*) in the Greenhouse. Host plants and experimental plants were not initially exposed to pesticide treatments.

Experimental poinsettia plants were grown from the plug stage in 6.5" plastic pots filled with Sunshine #4 soil mix. The plants were irrigated every day and soluble fertilizer 20-20-20 @ 200ppm was applied twice weekly.

**The** poinsettia plants were placed for 7 days to whitefly infected the greenhouse to obtain uniform colonies of insect nymphs on introduced plants. After 7 days, the plants were removed from the infested greenhouse and whitefly nymph population was counted using the discs method.

Two 5.47cm² discs were taken from each plant replicate, insects were observed under a stereoscope and counted. The discs were taken from the mid to upper strata areas of the plant as this area is preferred by insects for eggs laying and nymphs development. Upon initiation of the experiment the whitefly population was considered uniform.

Treatments were applied with CO₂ backpack sprayer with a single solid cone nozzle (TG1) at 60 psi. Plants were thoroughly sprayed with tested treatments and immediately exposed to direct sunlight for 8 h before returning to the greenhouse setting. For each treatment, five single plant replicates were used. After 8 h of outside sun exposure all plants were carefully moved into the greenhouse and placed on a wire mesh bench in RCB design. A second application of treatments was made 7 days after the first application using the same methodology.

The number of whitefly nymphs per disc was counted at 1 day before treatments application (DAA), 6 days after first application (DAA), 13 days after first application (or 6 days after application 2), 20 days after first application 1 (or 13 days after application 2) and 28 days after application 1 (or 21 days after application 2). The results are summarized in Table 3A.

**Table 3A. Number of whitefly live nymphs per sample before and after treatments.**

| Treatment | Mean number of whitefly live nymphs/sample | | | | |
|---|---|---|---|---|---|
| | -1 DAA | 6 DAA | 13 DAA | 20 DAA | 28 DAA |
| 0.2 wt% MgChln | 111.4 | 68 | 56.6 | 74.8 | 30.1 |
| 0.1 wt% Na₂EDTA | 93 | 53 | 69.7 | 89.9 | 44.3 |
| 0.2 wt% MgChIn + 0.1 wt%Na₂EDTA | 110.2 | 50.1 | 51.9 | 69.4 | 23.6 |
| Control (water) | 93 | 72 | 90.12 | 81.6 | 69.2 |

Poinsettia plants were evaluated for phytotoxicity after treatments. Phytotoxicity on the plants was rated 0 to 10, where 0=healthy plants, 10=dead plants at 6 DAA and 13DAA. Ratings were based on visual observations for symptoms such as chlorosis, necrosis, deformation, stunting and compared to plants in the untreated control. The results of phytotoxicity tests are summarized in Table 3B.

**Table 3B. Phytotoxicity on poinsettia plants after treatments.**

| Treatment | Phytotoxicity (0-10) | | | |
|---|---|---|---|---|
| | 6 DAA | 13 DAA | 20 DAA | 28 DAA |
| 0.2%MgChln | 0 | 0 | 0 | 0 |
| 0.1%Na₂EDTA | 0 | 0 | 0 | 0 |
| 0.2%MgChIn+0.1%Na₂EDTA | 0 | 0 | 0 | 0 |

### Example 4

Experiments were conducted to evaluate the efficacy of photosensitizers and chelators for control of insect pest Silverleaf whitefly (*Bemesia argentifolii*).

The experiments were conducted in a greenhouse. Whiteflies were maintained on Common Poinsettia plants (*Euphorbia pulcherrima*) cv Prestige Red in the Greenhouse. Host plants and experimental plants were not initially exposed to pesticide treatments.

Experimental poinsettia plants were grown in 6.5" plastic pots filled with Sunshine #4 soil mix. The plants were irrigated every day and soluble fertilizer 20-20-20 @ 200ppm was applied twice weekly.

The poinsettia plants were placed into a whitefly infected greenhouse for 30 days to obtain uniform colonies of insect nymphs on the plants. After 30 days, the infested plants were moved from the infested greenhouse and placed outside of the greenhouse for a two-day adaptation period prior to the treatment. Whitefly nymph population was counted one day prior to the treatment using the discs method.

Two 5.47cm² discs were taken from each replicate, insects were observed under a stereoscope and counted. The discs were taken from the randomly collected leaves from the mid to upper strata areas of the plant as this area is preferred by insects for eggs laying and nymphs development. Upon initiation of the experiment the whitefly population was considered uniform.

Treatments were applied two times with a 7-day interval using CO₂ backpack sprayer with a single hollow cone nozzle (TVXK-3) at 40 psi. Plants were thoroughly sprayed with tested treatments and immediately exposed to direct sunlight for 2 days before returning to the greenhouse setting. For each treatment, six single plant replicates were used. After 2 days of outside sun exposure, all plants were carefully moved into the separate greenhouse and placed on a wire mesh bench in a Completely Randomized design. A second application of treatments was made 7 days after the first application using the same methodology.

The number of whitefly nymphs per disc was counted at 6 and 13 days after second foliar application (6 DAT2, 13DAT2). The Plants were evaluated for phytotoxicity at 6 days after each foliar spray.

**Table 4. Number of whitefly live nymphs per sample before and after treatments**

| | Treatment | Insects Suppression, % | | Phytotoxicity % |
|---|---|---|---|---|
| # | | 6 DAT2 | 13 DAT2 | 13 DAT2 |
| 1 | Control (water) | 0 | 0 | 0 |
| 2 | 0.1% Ce6 | 27 | 28 | 0 |
| 3 | 0.1% TPPS-Na3 | 37 | 52 | 0 |
| 4 | 0.1% PPIX | 41 | 28 | 0 |
| 5 | 1.2% Baypure DS | 29 | 66 | 0 |
| 6 | 0.1% Na₂EDTA | 36 | 31 | 0 |
| 7 | 0.1% TPPS-Na3 +1.2% Baypure DS | 57 | 82 | 0 |
| 8 | 0.1% Ce6 + 0.1% Na₂EDTA | 59 | 53 | 0 |
| 9 | 0.1% PPIX +0.1% Na₂EDTA | 57 | 67 | 0 |

| | | | | |
|---|---|---|---|---|
| *TPPS-Na3: meso-tetra-(4-sulfonatophenyl) porphyrin trisodium salts PPIX: Protoporphyrin sodium salts | | | | |

Combinations of a photosensitizer (Ce6, TPPS, PPIX) with a chelator (EDTA or Baypure DS) showed greater suppression on insects compared with photosensitizers or chelators alone.

### Example 5

Experiments were conducted to evaluate the efficacy of a photosensitizer-chelator combination for control insect pests in light and dark conditions.

A small German cockroach colony (*Blatella germanica*) was purchased from Benzon Research (USA). Cockroach mix sex nymphs were used as model insect.

The experiments were conducted in a lab. Insectary at 25°C in light and dark conditions. Light condition: 12h light/12 h dark photoperiod. During the light period insects were exposed to Spectrum Physio Spec Indoor LED light 250 µmol m⁻² s^{-1.} Dark condition: insects were kept in complete dark. Insects were fed prior to treatments with 1% sucrose solution and were anesthetizing in the fridge for a few minutes before handling.

Ten homogenous cockroach nymphs (3-4 instar) were carefully transferred into each half pint clear glass jar abraded internally to provide surface for climbing and lined with 9cm in diameter filter paper. The treatments were administered to cockroaches in a 1% sucrose solution positioned in 10 ml glass vials abraded externally for easy climbing insects and placed in jars. Fresh treatment solutions were replaced each 3 days. Glass jars were covered with mesh. Insects had a continued access to treatments and had no access to other food source or water. Completely randomized design with 4 replications per treatment was used.

Treated insects were kept under specific conditions for 14 days and mortality count was performed at 7 and 14 days after exposure to treatments. Insects were considered dead if no movement was detected after mechanical stimulation.

**Table 5. Effect of photosensitizer and chelator on Cockroaches.**

| | Treatment | Insects Suppression %, 14 DAT | |
|---|---|---|---|
| # | | Light (12/12 h light-dark) | Dark |
| 1 | Untreated Control | 0 | 0 |
| 2 | 0.15% MgChIn + 0.1% Na₂EDTA | 83 | 38 |
| 3 | 0.1% Na₂EDTA | 33 | 0 |

## Claims

1. Use of a composition for controlling insect pests on a plant, the composition comprising:
a nitrogen-bearing macrocyclic compound which is a photosensitizer that generates reactive oxygen species in the presence of light, the photosensitizer being selected from the group consisting of a porphyrin, a reduced porphyrin and a mixture thereof;
ethylenediaminetetraacetic acid (EDTA) or an agriculturally acceptable salt thereof; and
a carrier fluid,
wherein upon applying the composition to the plant and exposing the plant to light, the nitrogen-bearing macrocyclic compound generates reactive oxygen species, and/or
wherein upon applying the composition to the insect pests and exposing the insect pest to light, the nitrogen-bearing macrocyclic compound generates reactive oxygen species.

2. The use of the composition of claim 1, wherein the nitrogen-bearing macrocyclic compound is a chlorin.

3. The use of the composition of claim 1, wherein the nitrogen-bearing macrocyclic compound is chlorophyllin or protoporphyrin IX (PP IX).

4. The use of the composition of any one of claims 1 to 3, wherein the nitrogen-bearing macrocyclic compound comprises a metallated nitrogen-bearing macrocyclic compound formed by complexation of the nitrogen-bearing macrocyclic compound with a metal, the metal being selected such that, in response to light exposure, the metallated nitrogen-bearing compound generates reactive oxygen species.

5. The use of the composition of claim 4, wherein the metal is selected from the group consisting of Mg(II), Zn(II), Pd(II), Sn(IV), Al(III), Pt(II), Si(IV), Ge(IV), Ga(III) and In(III), Cu(II), Co(II), Fe(II), Mn(II), Co(III), Fe(III), Fe(IV) and Mn(III).

6. The use of the composition of any one of claims 1 to 5, wherein the chelating agent is metalated.

7. The use of the composition of any one of claims 1 to 6, wherein the combination further comprises a surfactant.

8. The use of the composition of claim 7, wherein the surfactant is selected from the group consisting of an ethoxylated alcohol, a polymeric surfactant, a fatty acid ester, a polyethylene glycol, an ethoxylated alkyl alcohol, a monoglyceride, an alkyl monoglyceride and a mixture thereof.

9. The use of the composition of any one of claims 1 to 8, wherein the composition further comprises an oil selected from the group consisting of a mineral oil, a vegetable oil and a mixture thereof.

10. The use of the composition of any one of claims 1 to 9, wherein the nitrogen-bearing macrocyclic compound is provided at a concentration between about 5 µM and about 10 mM.

11. The use of the composition of any one of claims 1 to 10, wherein the chelating agent is provided at a concentration between about 5 µM and about 5000 µM.

12. The use of the composition of any one of claims 1 to 11, wherein the carrier fluid comprises water or an oil-in-water emulsion.

13. A method for controlling insect pests on a plant, the method comprising:
applying to the plant and/or to the insect pests a combination comprising:
a nitrogen-bearing macrocyclic compound which is a photosensitizer that generates reactive oxygen species in the presence of light, the photosensitizer being selected from the group consisting of a porphyrin, a reduced porphyrin and a mixture thereof; and
ethylenediaminetetraacetic acid (EDTA) or an agriculturally acceptable salt thereof; and
exposing the plant to light in the presence of the insect pests to activate the nitrogen-bearing macrocyclic compound and generate reactive oxygen species.

14. The method of claim 14, wherein applying the combination to the plant comprises applying a composition comprising the components of the combination, to the plant.

## Patentansprüche

1. Verwendung einer Zusammensetzung zur Bekämpfung von Schadinsekten auf einer Pflanze, wobei die Zusammensetzung Folgendes umfasst:
eine stickstoffhaltige makrocyclische Verbindung, bei der es sich um einen Photosensibilisator handelt, der in Gegenwart von Licht reaktive Sauerstoffspezies erzeugt, wobei der Photosensibilisator aus der aus einem Porphyrin, einem reduzierten Porphyrin und einer Mischung davon bestehenden Gruppe ausgewählt ist;
Ethylendiamintetraessigsäure (EDTA) oder ein landwirtschaftlich unbedenkliches Salz davon; und
ein Trägerfluid,
wobei beim Aufbringen der Zusammensetzung auf die Pflanze und Aussetzen der Pflanze gegenüber Licht die stickstoffhaltige makrocyclische Verbindung reaktive Sauerstoffspezies erzeugt und/oder
wobei beim Aufbringen der Zusammensetzung auf die Schadinsekten und Aussetzen des Schadinsekts gegenüber Licht die stickstoffhaltige makrocyclische Verbindung reaktive Sauerstoffspezies erzeugt.

2. Verwendung der Zusammensetzung nach Anspruch 1, wobei es sich bei der stickstoffhaltigen makrocyclischen Verbindung um ein Chlorin handelt.

3. Verwendung der Zusammensetzung nach Anspruch 1, wobei es sich bei der stickstoffhaltigen makrocyclischen Verbindung um Chlorophyllin oder Protoporphyrin IX (PP IX) handelt.

4. Verwendung der Zusammensetzung nach einem der Ansprüche 1 bis 3, wobei die stickstoffhaltige makrocyclische Verbindung eine metallisierte stickstoffhaltige makrocyclische Verbindung umfasst, die durch Komplexierung der stickstoffhaltigen makrocyclischen Verbindung mit einem Metall gebildet wird, wobei das Metall so ausgewählt ist, dass die metallisierte stickstoffhaltige Verbindung als Reaktion auf Lichteinwirkung reaktive Sauerstoffspezies erzeugt.

5. Verwendung der Zusammensetzung nach Anspruch 4, wobei das Metall aus der aus Mg(II), Zn(II), Pd(II), Sn(IV), Al(III), Pt(II), Si(IV), Ge(IV), Ga(III) and In(III), Cu(II), Co(II), Fe(II), Mn(II), Co(III), Fe(III), Fe(IV) und Mn(III) bestehenden Gruppe ausgewählt ist.

6. Verwendung der Zusammensetzung nach einem der Ansprüche 1 bis 5, wobei der Chelatbildner metallisiert ist.

7. Verwendung der Zusammensetzung nach einem der Ansprüche 1 bis 6, wobei die Kombination weiterhin ein Tensid umfasst.

8. Verwendung der Zusammensetzung nach Anspruch 7, wobei das Tensid aus der aus einem ethoxylierten Alkohol, einem polymeren Tensid, einem Fettsäureester, einem Polyethylenglykol, einem ethoxylierten Alkylalkohol, einem Monoglycerid, einem Alkylmonoglycerid und einer Mischung davon bestehenden Gruppe ausgewählt ist.

9. Verwendung der Zusammensetzung nach einem der Ansprüche 1 bis 8, wobei die Zusammensetzung weiterhin ein aus der aus einem Mineralöl, einem Pflanzenöl und einer Mischung davon bestehenden Gruppe ausgewähltes Öl umfasst.

10. Verwendung der Zusammensetzung nach einem der Ansprüche 1 bis 9, wobei die stickstoffhaltige makrocyclische Verbindung in einer Konzentration zwischen etwa 5 µM und etwa 10 mm bereitgestellt wird.

11. Verwendung der Zusammensetzung nach einem der Ansprüche 1 bis 10, wobei der Chelatbildner in einer Konzentration zwischen etwa 5 µM und etwa 5000 µM bereitgestellt wird.

12. Verwendung der Zusammensetzung nach einem der Ansprüche 1 bis 11, wobei das Trägerfluid Wasser oder eine Öl-in-Wasser-Emulsion umfasst.

13. Verfahren zur Bekämpfung von Schadinsekten auf einer Pflanze, wobei das Verfahren Folgendes umfasst:
das Aufbringen einer Kombination auf die Pflanze und/oder die Schadinsekten, die Folgendes umfasst:
eine stickstoffhaltige makrocyclische Verbindung, bei der es sich um einen Photosensibilisator handelt, der in Gegenwart von Licht reaktive Sauerstoffspezies erzeugt, wobei der Photosensibilisator aus der aus einem Porphyrin, einem reduzierten Porphyrin und einer Mischung davon bestehenden Gruppe ausgewählt ist; und
Ethylendiamintetraessigsäure (EDTA) oder ein landwirtschaftlich unbedenkliches Salz davon; und
das Aussetzen der Pflanze gegenüber Licht in Gegenwart der Schadinsekten zum Aktivieren der stickstoffhaltigen makrocyclischen Verbindung und zum Erzeugen reaktiver Sauerstoffspezies.

14. Verfahren nach Anspruch 14, wobei das Aufbringen der Kombination auf die Pflanze das Aufbringen einer die Komponenten der Kombination umfassenden Zusammensetzung auf die Pflanze umfasst.

## Revendications

1. Utilisation d'une composition pour lutter contre des organismes nuisibles de type insecte sur un végétal, la composition comprenant :
un composé macrocyclique portant de l'azote qui est un photosensibilisateur qui génère des espèces d'oxygène réactives en présence de lumière, le photosensibilisateur étant choisi dans le groupe constitué d'une porphyrine, d'une porphyrine réduite et d'un mélange de celles-ci ;
de l'acide éthylènediaminetétraacétique (EDTA) ou un sel acceptable sur le plan agricole correspondant ; et
un fluide porteur,
dans laquelle, lors de l'application de la composition sur le végétal et de l'exposition du végétal à la lumière, le composé macrocyclique portant de l'azote génère des espèces d'oxygène réactives, et/ou
dans laquelle, lors de l'application de la composition sur les organismes nuisibles de type insecte et de l'exposition de l'organisme nuisible de type insecte à la lumière, le composé macrocyclique portant de l'azote génère des espèces d'oxygène réactives.

2. Utilisation de la composition selon la revendication 1, dans laquelle le composé macrocyclique portant de l'azote est une chlorine.

3. Utilisation de la composition selon la revendication 1, dans laquelle le composé macrocyclique portant de l'azote est la chlorophylline ou la protoporphyrine IX (PP IX).

4. Utilisation de la composition selon l'une quelconque des revendications 1 à 3, dans laquelle le composé macrocyclique portant de l'azote comprend un composé macrocyclique portant de l'azote métallé formé par complexation du composé macrocyclique portant de l'azote avec un métal, le métal étant choisi de telle sorte que, en réponse à une exposition à la lumière, le composé portant de l'azote métallé génère des espèces d'oxygène réactives.

5. Utilisation de la composition selon la revendication 4, dans laquelle le métal est choisi dans le groupe constitué de Mg(II), Zn(II), Pd(II), Sn(IV), Al(III), Pt(II), Si(IV), Ge(IV), Ga(III) et In(III), Cu(II), Co(II), Fe(II), Mn(II), Co(III), Fe(III), Fe(IV) et Mn(III).

6. Utilisation de la composition selon l'une quelconque des revendications 1 à 5, dans laquelle l'agent chélatant est métallé.

7. Utilisation de la composition selon l'une quelconque des revendications 1 à 6, dans laquelle la combinaison comprend en outre un tensioactif.

8. Utilisation de la composition selon la revendication 7, dans laquelle le tensioactif est choisi dans le groupe constitué d'un alcool éthoxylé, d'un tensioactif polymérique, d'un ester d'acide gras, d'un polyéthylèneglycol, d'un alcool alkylique éthoxylé, d'un monoglycéride, d'un alkylmonoglycéride et d'un mélange de ceux-ci.

9. Utilisation de la composition selon l'une quelconque des revendications 1 à 8, dans laquelle la composition comprend en outre une huile choisie dans le groupe constitué d'une huile minérale, d'une huile végétale et d'un mélange de celles-ci.

10. Utilisation de la composition selon l'une quelconque des revendications 1 à 9, dans laquelle le composé macrocyclique portant de l'azote est fourni à une concentration comprise entre environ 5 µM et environ 10 mM.

11. Utilisation de la composition selon l'une quelconque des revendications 1 à 10, dans laquelle l'agent chélatant est fourni à une concentration comprise entre environ 5 µM et environ 5 000 µM.

12. Utilisation de la composition selon l'une quelconque des revendications 1 à 11, dans laquelle le fluide porteur comprend de l'eau ou une émulsion huile-dans-eau.

13. Procédé de lutte contre des organismes nuisibles de type insecte sur un végétal, le procédé comprenant :
l'application sur le végétal et/ou sur les organismes nuisibles de type insecte d'une combinaison comprenant :
un composé macrocyclique portant de l'azote qui est un photosensibilisateur qui génère des espèces d'oxygène réactives en présence de lumière, le photosensibilisateur étant choisi dans le groupe constitué d'une porphyrine, d'une porphyrine réduite et d'un mélange de celles-ci ; et
de l'acide éthylènediaminetétraacétique (EDTA) ou un sel acceptable sur le plan agricole correspondant ; et
l'exposition du végétal à la lumière en présence des organismes nuisibles de type insecte pour activer le composé macrocyclique portant de l'azote et générer des espèces d'oxygène réactives.

14. Procédé selon la revendication 14, dans lequel l'application de la combinaison sur le végétal comprend l'application d'une composition comprenant les composants de la combinaison, sur le végétal.
